# NOUVEAU FASCICULE DE BREVET EUROPEEN

(11) **EP 2 659 765 B2**
(45) Date de publication et mention de la décision concernant l'opposition: **14.04.2021**
(45) Mention de la délivrance du brevet: 04.03.2015
(21) Numéro de dépôt: 13166553.1
(22) Date de dépôt: 03.05.2013
(51) Int. Cl.: A01G 3/037

(54) **Outil électroportatif**
Mobiles Elektrowerkzeug
Portable electric tool

(30) Priorité: 04.05.2012 CH 6162012
(43) Date de publication de la demande: 06.11.2013
(73) Titulaire: Felco SA, 2206 Les Geneveys-sur-Coffrane (CH)
(72) Inventeur: Bieler, Thierry, 1112 Echichens (CH); Cardoletti, Laurent, 1844 Villeneuve (CH); Fleury, Christian, 1585 Bellerive (CH); Koechli, Christian, 1462 Yvonnand (CH); Tinguely, Simon, 1007 Lausanne (CH)
(74) Mandataire: P&TS SA (AG, Ltd.)

(56) Documents cités:
- EP-A1- 1 574 125
- EP-A1- 2 156 732
- EP-A1- 2 163 853
- JP-A- 2008 023 694
- US-A1- 2009 241 351
- US-A1- 2011 056 082

## Description

### Domaine technique

La présente invention concerne un procédé d'introduction de commandes dans un outil électroportatif. Selon un aspect non revendiqué, la présente invention concerne un outil électroportatif muni d'une lame de coupe mobile et une contre-lame fixe ainsi qu'une gâchette pour contrôler le déplacement de cette lame. Selon un autre aspect non revendiqué, la présente invention concerne un outil électroportatif comportant un circuit électronique avec une mémoire permettant de stocker de manière semi-permanente des paramètres de fonctionnement de l'outil.

### Etat de la technique

EP1574125 décrit un sécateur comme outil électroportatif muni d'une gâchette pour contrôler l'ouverture et la fermeture des lames. La gâchette est munie d'un aimant mobile en sorte que sa position instantanée peut être déterminée à l'aide d'un capteur de Hall fixe. Ainsi, la position de la lame mobile du sécateur correspond à la position instantanée de la gâchette.

Une gâchette similaire dont la position instantanée permet de contrôler la position ou la vitesse d'une lame ou d'un autre outil mobile en rotation ou en translation est aussi utilisée dans de nombreux autres outils électroportatifs.

De nombreux outils électroportatifs comportent en outre un organe haptique, par exemple un bouton, une molette, ou un autre organe manipulé avec le doigt, afin de contrôler une fonction additionnelle. Dans le cas d'un sécateur électroportatif par exemple, des organes haptiques peuvent être utilisés pour mettre l'outil en mode de veille ou pour ajuster la position d'écartement maximal des lames.

EP2156732 décrit un sécateur électroportatif comprenant une double gâchette, consistant en une gâchette principale de commande de l'actionneur de la lame et une gâchette auxiliaire reliée à la gâchette principale. Le pivotement de la gâchette auxiliaire autour d'une articulation permet d'activer des fonctions complémentaires.

La manipulation des organes haptiques pour exécuter les fonctions additionnelles nécessite cependant de relâcher la gâchette. Dans le cas d'un outil lourd, il peut être nécessaire de le prendre à deux mains afin d'effectuer cette manipulation. Chaque manipulation interrompt donc le travail normal avec l'outil, et peut en outre créer un risque pour l'utilisateur lorsque celui-ci doit par exemple lâcher une prise pour manipuler l'outil avec ses deux mains.

Par ailleurs, la fabrication d'un outil muni de différents organes haptiques est onéreuse, notamment en raison du câblage de ces différents organes. D'autre part, la reprogrammation des fonctions attribuées à chaque organe haptique n'est généralement pas possible.

Il existe un besoin pour un outil électroportatif qui évite les inconvénients ci-dessus liés à la manipulation d'organes haptiques supplémentaires pour exécuter les fonctions auxiliaires.

EP2163853 décrit un outil électroportatif dans lequel des capteurs magnétorésistifs fixes coopèrent avec des aimants à magnétisation orientée afin d'asservir les déplacements de la lame mobile à ceux de la gâchette.

US2011056082 décrit un outil électroportatif dans lequel un interrupteur qui appartient au corps de l'outil permet à l'utilisateur de sélectionner soit un programme dans lequel, après un seul appui sur la gâchette, la lame mobile se renferme sur celle fixe, revient dans sa position initiale, se renferme à nouveau sur celle fixe, revient à nouveau dans sa position initiale etc. de façon continue sans un appui chaque fois sur la gâchette, soit un programme dans lequel lors de l'appui sur la gâchette la lame mobile se referme sur celle fixe mais après cet appui elle retourne dans sa position initiale sans plus bouger ; seulement après un nouveau appui sur la gâchette elle se renferme encore sur celle fixe.

On connait par ailleurs des outils à main électroportatifs munis d'un circuit électronique avec une mémoire semi-permanente pour stocker des données relatives à l'utilisation de cet outil. De telles données comprennent par exemple le nombre de coupes effectuées avec un sécateur électroportatif, le temps d'utilisation de l'outil, et d'autres données liées à chaque coupe ; elles sont par exemple utilisées par le service après-vente pour vérifier l'utilisation de l'outil.

Les sécateurs électroportatifs ainsi que d'autres outils nécessitent une capacité des batteries importantes pour garantir leur autonomie ; ces batteries sont souvent stockées dans un sac à dos lié à l'outil à main par un câble d'alimentation. Il est souhaitable de disposer dans ce sac à dos également le circuit électronique d'alimentation du moteur du sécateur, afin de réduire autant que possible le poids et l'encombrement de l'outil à main. Dans ce cas, le circuit électronique dans le sac à dos génère des signaux d'alimentation du moteur du sécateur, en fonction des signaux de position de la gâchette reçus du sécateur.

Le service après-vente souhaite parfois accéder également à des données déterminées par le circuit électronique d'alimentation du moteur, afin par exemple de vérifier le courant qui est généré sur chaque phase ou au total. Dans ce but, il est avantageux de prévoir une mémoire semi-permanente afin de sauvegarder des données relatives à l'utilisation du sécateur déterminées par le circuit électronique d'alimentation du moteur.

Il existe donc un besoin pour un outil électroportatif muni d'une ou plusieurs batteries déportées et de moyens de stockage afin d'accéder à des données relatives à l'utilisation de l'outil déterminées aussi bien dans l'outil à main que dans l'électronique de commande déportée.

### Bref résumé de l'invention

L'invention concerne un procédé d'introduction de commandes dans un outil électroportatif à gâchette.

Selon un aspect non revendiqué, ces buts sont atteints notamment au moyen d'un outil électroportatif comportant une gâchette ; un moteur ; un outil entraîné par ledit moteur ; un circuit électronique pour commander la position angulaire et/ou la vitesse du moteur en fonction de la position instantanée de la gâchette ; dans lequel le circuit électronique est agencé pour détecter une séquence de déplacement prédéterminée de la gâchette et pour exécuter une fonction en réponse à la détection d'une telle séquence.

Cette caractéristique permet donc d'exécuter une ou plusieurs fonctions auxiliaires en actionnant la gâchette, et sans devoir prévoir puis manipuler un organe haptique supplémentaire ni une gâchette supplémentaire. Le coût de l'outil peut ainsi être réduit. Par ailleurs, l'accès aux fonctions additionnelles peut être effectué sans lâcher la gâchette et sans devoir utiliser la deuxième main, ce qui est plus rapide et moins dangereux.

Différentes séquences de déplacement de la gâchette peuvent être imaginées pour exécuter des fonctions supplémentaires. Avantageusement, ces séquences sont peu susceptibles de se produire lors d'une utilisation normale dé la gâchette, et résultent donc nécessairement d'une action consciente et volontaire de l'utilisateur qui souhaite exécuter une fonction supplémentaire, au lieu d'utiliser l'outil normalement.

Dans un mode de réalisation, une première séquence de déplacement prédéterminé comporte une succession de deux pressions sur la gâchette durant une première durée inférieure à un premier seuil (T1) prédéterminé. Ce déplacement correspond à un double-clic rapide.

Une deuxième séquence de déplacement prédéterminé comporte une succession de deux pressions sur la gâchette durant une durée inférieure à un premier seuil (T1) prédéterminé suivie par un maintien de la gâchette pressée pendant une durée supérieure à un deuxième seuil prédéterminé (T2).

Une troisième séquence de déplacement prédéterminé comporte une succession de deux pressions sur la gâchette durant une durée inférieure à un premier seuil (T1) prédéterminé suivie par un maintien de la gâchette pressée pendant une durée supérieure à un troisième seuil prédéterminé (T3). Le troisième seuil peut être plus long que le deuxième seuil (T2) afin de distinguer entre l'introduction d'une deuxième commande et l'introduction d'une troisième commande.

Afin de rendre l'introduction de commandes plus intuitive, un signal sonore, par exemple un bip, peut être généré lorsqu'une commande a été reconnue. Le signal sonore généré peut dépendre de la commande reconnue.

Une des fonctions exécutées en réponse à la détection d'une séquence prédéterminée peut comprendre la modification de l'angle d'écartement de la lame mobile en position ouverte par rapport à la contre-lame.

Une des fonctions exécutée en réponse à la détection d'une séquence prédéterminée peut comprendre la libération de la lame pour ajuster manuellement son croisement par rapport à la contre-lame.

Une des fonctions exécutées en réponse à la détection d'une séquence prédéterminée peut comprendre la mise en mode de veille de l'outil électroportatif.

Avantageusement, l'outil électroportatif est muni d'une gâchette mécaniquement simple qui permet uniquement deux manipulations : presser la gâchette ; ou la relâcher pour qu'elle reprenne sa position initiale sous l'effet d'un ressort ou d'un élément équivalent. Une modification de la gâchette n'est pas nécessaire pour détecter des commandes d'introduction de fonctions additionnelles. Un circuit électronique détermine en chaque instant la position instantanée de la gâchette, par exemple au moyen d'un capteur magnétique, puis utilise une succession de positions instantanées successives afin de déterminer si le déplacement de la gâchette correspond à une séquence prédéterminée devant déclencher l'exécution d'une fonction auxiliaire.

Les déplacements particuliers de la gâchette sont avantageusement détectés par un processeur qui exécute un programme informatique pour détecter si une séquence de déplacement correspond à un motif prédéterminé, et qui dans ce cas exécute une fonction particulière correspondant à ce déplacement prédéterminé. Il est ainsi possible de modifier à n'importe quel moment, par programmation, les fonctions associées à un déplacement prédéterminé, et/ou de détecter d'autres mouvements prédéterminés pour exécuter des fonctions particulières supplémentaires.

Selon un autre aspect non revendiqué, qui peut être indépendant du premier aspect ou combiné à un ou plusieurs aspects ci-dessus, un outil électroportatif comporte un ensemble à main, un bloc d'alimentation et un câble d'alimentation et de données reliant cet outil électroportatif au bloc d'alimentation. L'ensemble à main comporte un moteur, un outil entraîné par ce moteur, et un premier circuit électronique avec une mémoire semi-permanente pour stocker des premières données relatives à l'utilisation de l'ensemble à main et qui sont déterminées dans cet ensemble à main. Le bloc d'alimentation comporte une batterie, ou plusieurs batteries indépendantes les unes des autres, et un deuxième circuit électronique pour commander la position angulaire ou la vitesse du moteur. Le deuxième circuit électronique est agencé pour déterminer des deuxièmes données relatives à l'utilisation de l'ensemble à main et pour stocker ces deuxièmes données dans ladite mémoire semi-permanente en les transmettant au travers du câble d'alimentation et de données.

On appelle dans ce texte mémoire semi-permanente une mémoire dans laquelle des données écrites sont conservées mêmes lorsque l'alimentation est interrompue, jusqu'à ce qu'elles soient volontairement effacées. La mémoire semi-permanente peut être par exemple de type flash, EProm, EEProm, MRAM, à disque dur etc.

Cette solution présente notamment l'avantage de stocker dans une mémoire semi-permanente dans l'ensemble à main des données relatives à l'utilisation de cet ensemble à main qui sont déterminées aussi bien dans l'ensemble à main lui-même que dans le circuit électronique du bloc d'alimentation. Ainsi, même si l'ensemble à main est employé avec un bloc d'alimentation différent, ou avec un circuit électronique de commande différent, les données relatives à l'utilisation de cet ensemble à main restent stockées dans l'ensemble à main lui-même, indépendamment de l'endroit où elles ont été déterminées.

Les premières données déterminées dans l'ensemble à main et relatives à l'utilisation de l'ensemble à main peuvent par exemple comprendre le nombre d'actionnement de la gâchette. Ces données peuvent par exemple être déterminées par un circuit de détermination des déplacements de la gâchette.

Les deuxièmes données déterminées dans le bloc d'alimentation et relatives à l'utilisation de l'ensemble à main peuvent par exemple comprendre des données déterminées d'après la mesure du courant d'alimentation des phases du moteur de l'ensemble à main. Ces données peuvent être déterminées par exemple par le circuit d'alimentation du moteur et transmises à l'ensemble à main au travers du câble d'alimentation et de données pour y être sauvegardées.

Le deuxième circuit électronique faisant partie du bloc d'alimentation peut comporter une deuxième mémoire semi-permanente pour y stocker des données relatives à l'utilisation du bloc d'alimentation.

La batterie peut comporter un circuit de gestion de batterie pour gérer la charge et/ou la décharge de la batterie. Le circuit de gestion de batterie peut comporter une troisième mémoire semi-permanente pour y stocker des données relatives à l'utilisation de la batterie.

### Brève description des figures

Des exemples de mise en œuvre de l'invention sont indiqués dans la description illustrée par les figures annexées dans lesquelles :
Les figures 1a à 1c illustrent une vue d'ensemble d'un outil électroportatif relié par un câble à un bloc d'alimentation ;
La figure 2 est un schéma-bloc des principaux composants électriques ou électroniques de l'outil électroportatif ;
La figure 3 est une vue de détail d'une gâchette de l'outil électroportatif.

### Exemple(s) de mode de réalisation de l'invention

Dans la description suivante fournie à titre d'exemple, on fera référence, pour simplicité, à un sécateur. Il faut toutefois comprendre que l'invention n'est pas limitée à un procédé d'introduction de commande dans un tel instrument, mais inclut également les procédés d'introduction de commande dans tous les outils couverts par les revendications. L'invention n'est pas non plus limitée à l'agriculture, mais inclut aussi, par exemple des cisailles, des pinces ou des presses pour des applications industrielles, médicales, ou toute autre domaine.

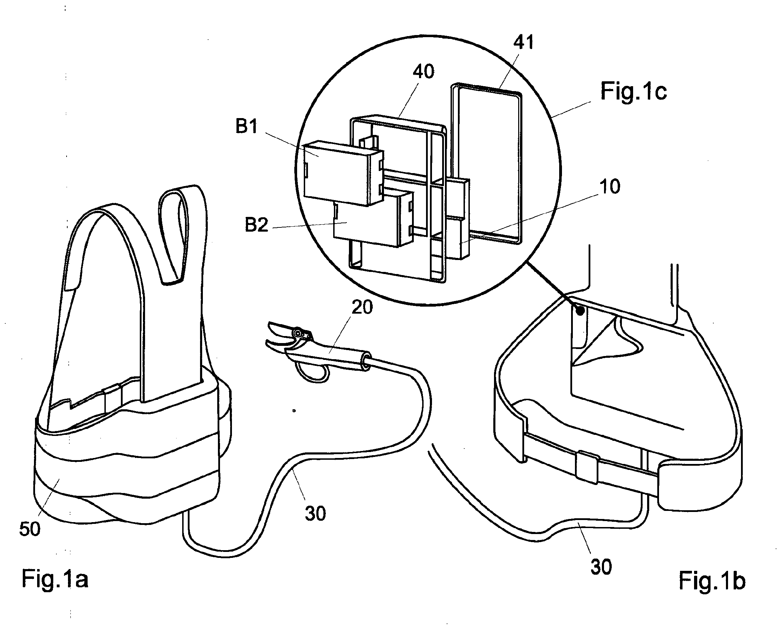

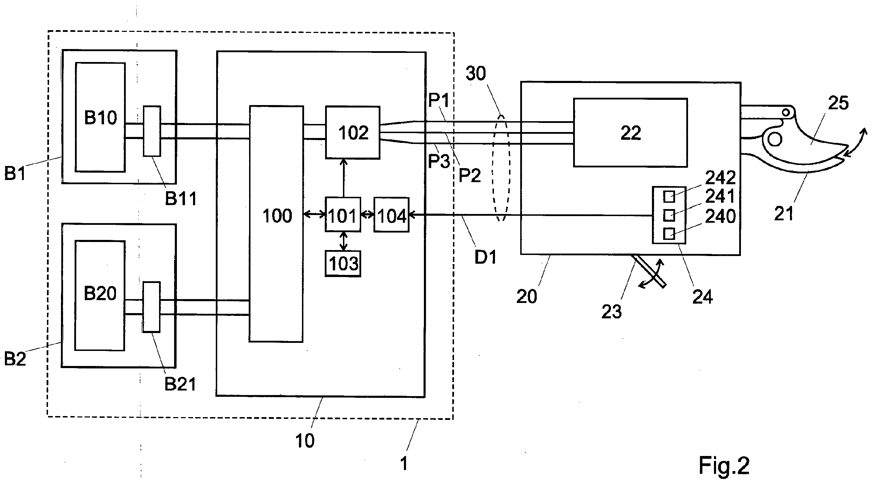

L'outil électroportatif illustré sur les figures 1a à 1c et sous forme de schéma-bloc sur la figure 2 comporte d'une part un ensemble à main 20 générant l'action mécanique de l'outil, et d'autre part un bloc d'alimentation 1 lié à l'ensemble à main 20 par un câble 30 d'alimentation et de données. L'ensemble à main 20 est dans cet exemple constitué par un sécateur électrique avec une contre-lame fixe 21 et une lame mobile 25 actionnée par un moteur électrique 22, comme illustré sur la figure 2. La position de la lame mobile 25 est déterminée par l'opérateur en agissant sur une gâchette 23, dont la position instantanée est déterminée à l'aide d'un premier circuit électronique 24 agencé pour détecter en tout temps la position de la gâchette et pour générer des signaux représentatifs de la position et/ou des déplacements de cette gâchette. Dans un mode de réalisation typique, la lame mobile 25 pivote sous l'effet du moteur 22 de manière à se rapprocher de la lame fixe lorsque la gâchette 23 est pressée, et s'éloigne de la lame fixe de manière à ouvrir le sécateur lorsque la gâchette est relâchée.

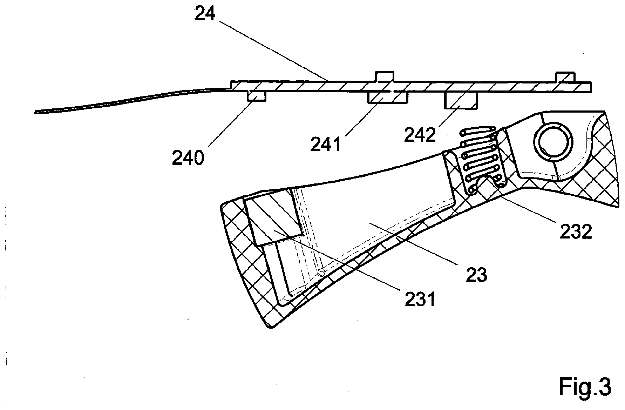

La figure 3 illustre une vue en coupe d'un exemple de gâchette 23. Elle comporte un ressort 232 pour repousser la gâchette en position de repos lorsqu'elle est relâchée. Dans cet exemple, le premier circuit électronique 24 permet de déterminer la position instantanée de la gâchette 23 au moyen d'un aimant mobile 231 lié à la gâchette et dont le champ magnétique est mesuré par un capteur de Hall ou un capteur magnétorésistif fixe 240 lié au corps du sécateur et monté sur un circuit imprimé. D'autres systèmes de détection de la position instantanée de la gâchette peuvent être imaginés, y compris des systèmes basés sur un potentiomètre, des systèmes inductifs, capacitifs, optiques, ou des systèmes magnétiques comportant un arrangement différents de composants fixes et mobiles.

Le bloc d'alimentation 1 est destiné à être porté par l'utilisateur, par exemple dans un sac à dos 50. Il comporte d'une part une ou plusieurs batteries B1, B2, ...,Bx et d'autre part un deuxième circuit électronique 10 pour générer des tensions d'alimentation du moteur 22 sur les conducteurs d'alimentation bi- ou tri-phasés P1, P2, P3. Il est aussi possible d'inclure tout ou partie des éléments du bloc d'alimentation 1 dans l'ensemble à main 20. Avantageusement, les batteries B1, B2, ..., BX et le deuxième circuit électronique 10 sont chacun munis d'un boîtier individuel et peuvent ainsi être assembles et montés individuellement dans le sac à dos 50 ; le nombre de batteries peut être adapté par l'utilisateur afin d'augmenter l'autonomie de l'outil ou inversement de réduire le poids du sac. Des connecteurs électriques amovibles permettent de relier ces composants entre eux et à l'élément à main.

Les batteries B1, B2, .. , Bx incluent par exemple des cellules B10, B20,.. rechargeables, par exemple de type lithium-ion ou lithium-polymère. Chaque batterie inclut en outre un circuit électronique de gestion de batterie B11, B21, .., B2x afin de contrôler les charges et décharges des cellules ; le circuit électronique de gestion, qui fait partie du bloc d'alimentation 1, permet notamment de limiter le courant et de protéger la batterie si ses bornes de sortie sont mises en court-circuit. Le circuit électronique de gestion peut en outre inclure une mémoire semi-permanente (non représentée ; ci-après la troisième mémoire semi-permanente) pour y stocker des données relatives à l'utilisation de la batterie, par exemple le nombre de cycles de charge et de décharge, la tension maximale à laquelle elle peut être chargée, etc.

La ou les batteries B1, B2, .., Bx peuvent être connectées en parallèle au deuxième circuit électronique 10 via des connecteurs amovibles. Un circuit d'alimentation 100 comme élément du deuxième circuit électronique 10 génère une source de tension stable à partir des tensions fournies par les différentes batteries ; ce circuit permet de préférence la connexion en parallèle de plusieurs batteries ayant des tensions de charge différentes les unes des autres.

Le composant 102 (« driver ») est un circuit électronique alimenté par l'alimentation 100 et qui génère en tout temps les signaux P1, P2, P3 sur les différentes phases d'alimentation du moteur 22. La tension produite en tout temps est déterminée par un processeur 101 en fonction de signaux de commande provenant de l'élément à main 20 et dépendant notamment de la position instantanée de la gâchette 23 et/ou d'autres signaux de données provenant de l'élément à main 20. Le processeur 101 commande le circuit 102 de manière à ce que la position de la lame mobile 25 corresponde en tout temps à la position instantanée de la gâchette 23.

Le câble 30 reliant l'élément à main 20 au bloc d'alimentation 1 comporte un ou plusieurs conducteurs de données D1, en plus des conducteurs de phase déjà mentionnés. Afin de réduire le nombre de conducteurs, les signaux de données pourraient être multiplexés par-dessus les signaux d'alimentation. Dans l'exemple illustré, un circuit de communication 104 dans le deuxième circuit électronique 10 envoie et reçoit des données numériques sur un ou plusieurs conducteurs de données D1 ; l'élément à main 20 comporte de son côté un circuit de communication correspondant 241 pour recevoir et envoyer des données sur le ou les conducteurs de données D1. Les circuits 104 et 241 utilisent par exemple le protocole de communication CAN pour échanger des données.

L'élément à main 20 peut ainsi échanger des données et communiquer avec le deuxième circuit électronique 10 via le conducteur D1. Aucune communication n'est cependant prévue entre les batteries B1 et l'élément à main. Les batteries, bien que munies de leur électronique B11, B21, ne reçoivent aucune donnée relative à l'état ou à la configuration de l'ensemble à main 20. Inversement, l'ensemble à main 20 ne reçoit aucune information relative à l'état des batteries B1, B2, BX.

Le premier circuit électronique 24 permet de déterminer la position instantanée de la gâchette 23, et d'échanger des données avec le deuxième circuit électronique 10 afin de lui transmettre cette position instantanée, ou une information dérivée de cette position instantanée. Le circuit électronique rassemble par exemple sur un circuit imprimé commun un capteur de position 240, par exemple un capteur de Hall, un capteur magnétorésistif, ou tout autre capteur capable de déterminer la position instantanée de la gâchette 23. L'élément 241 déjà évoqué est un circuit de de communication avec le deuxième circuit électronique 10. Le composant 242 est une mémoire semi-permanente dans laquelle des données relatives à l'utilisation de l'ensemble à main, telles que déterminées à la fois dans l'ensemble à main et dans le deuxième circuit électronique, sont sauvegardées. D'autres composants, y compris un processeur, peuvent être prévus comme éléments du premier circuit électronique sur le même circuit imprimé dans l'ensemble à main.

Selon un aspect de l'invention non revendiqué, la mémoire semi-permanente 242 permet de sauvegarder :
- d'une part des données relatives à l'utilisation de l'ensemble à main 20 et déterminées par cet ensemble à main. Ces données incluent par exemple le nombre d'actionnement de la gâchette 23 depuis la mise en service de l'outil, le temps d'utilisation de l'outil, le nombre de déplacements particuliers prédéterminés de la gâchette, et/ou d'autres données déterminées par le premier circuit électronique 24, y compris par exemple des données de type statistiques relatives à l'utilisation de l'outil, et/ou des données relatives aux commandes introduites, et/ou des données relatives à des positions ou à des vitesses de composants mobiles de l'ensemble à main etc, et/ou la position de butées mécaniques afin de freiner des parties mobiles avant qu'elles n'arrivent en butée contre ces butées mécaniques. Dans une variante ces données incluent la position avant et/ou arrière des butées mécaniques afin d'appairer la partie électronique de l'outil avec celle mécanique. Dans une autre variante ces données incluent également la position des zéros du ou des capteurs 240, notamment dans le cas où ce(s) capteur(s) est(sont) des capteurs de Hall. Des données d'autres capteurs non représentés qui peuvent être prévus dans l'ensemble à main peuvent aussi être sauvegardées ;
- d'autre part, des données relatives à l'utilisation de l'ensemble à main 20 et déterminées par le deuxième circuit électronique 10 dans le bloc d'alimentation 1. Ces données incluent par exemple des données déterminées par le processeur 101 et/ou par le circuit 102 qui génère en tout temps les signaux P1, P2, P3 sur les différentes phases d'alimentation du moteur 22. Par exemple, ces données peuvent inclure ou dépendre du courant et/ou de la tension transmis aux différentes phases du moteur, y compris par exemple la vitesse de rotation du moteur 22, le couple fourni par ce moteur, ou d'autres données permettant de déterminer cette vitesse ou ce couple, y compris par exemple des données de type statistiques relatives à l'utilisation de l'outil, et/ou des données relatives aux commandes introduites, et/ou des données relatives à des positions ou à des vitesses de composants mobiles de l'ensemble à main etc.

La mémoire semi-permanente 242 rassemble ainsi la totalité des données relatives à l'utilisation de l'ensemble à main, même si une partie de ces données ont été déterminées, c'est-à-dire mesurées, dans le bloc d'alimentation distinct. De cette façon, le service après-vente peut accéder en lisant cette mémoire 242 à l'ensemble des données relatives à l'utilisation de cet ensemble à main, même si cet ensemble à main a été employé avec différents blocs d'alimentation. Dans une variante les données relatives à l'utilisation de l'ensemble à main et stockées dans la mémoire 242 ne peuvent pas être remises à zéro par l'utilisateur : de cette façon le service après-vente pourra accéder à toutes les données de l'outil.

Dans une autre variante le service après-vente accède à ces données à l'aide d'un programme en ligne, en connectant le deuxième circuit électronique 10 à un ordinateur via une prise USB par exemple.

Le deuxième circuit électronique 10 peut comporter sa propre mémoire semi-permanente 103 pour y sauvegarder des données relatives à l'utilisation de ce circuit ; une partie de ces données peuvent être les mêmes que celles qui sont transmises à l'ensemble à main. De cette façon, le service après-vente peut accéder en lisant cette mémoire 103 à l'ensemble des données relatives à l'utilisation de ce deuxième circuit électronique, même si ce deuxième circuit électronique 10 a été employé avec différents ensembles à main 20. Les données, ou une partie de ces données, peut avantageusement être remises à zéro par l'utilisateur, sans influencer sur les données sauvegardées dans l'élément à main. Par exemple, les statistiques éventuellement conservées dans le circuit 10 et relatives au nombre d'actionnement de l'ensemble à main peuvent avantageusement être effacées par l'utilisateur, puisqu'un circuit électronique est susceptible d'être employé par différents utilisateurs.

Le processeur 101 dans le deuxième circuit électronique 10, et/ou un processeur non illustré dans l'ensemble à main, exécute un programme permettant de détecter des séquence de déplacement prédéterminée de la gâchette 23 et pour exécuter une fonction en réponse à la détection d'une telle séquence. Avantageusement, ce processeur permet donc de détecter des séquences de déplacement inhabituelles, peu susceptibles de se produire lorsque la gâchette 23 est manipulée pour employer l'outil 20 et par exemple pour couper des branches, et qui sont donc interprétées comme des commandes d'exécution de fonctions supplémentaires.

Le processeur 101, ou un processeur dans l'ensemble à main, est agencé pour détecter des séquences de déplacement de la gâchette comprenant deux actionnements de la gâchette pressée rapidement pendant une durée inférieure à un seuil T1. Le seuil T1 est par exemple inférieur à 2 secondes, de préférence inférieur à une seconde. Cette séquence est appelée double-clic. Elle a pour effet de déclencher une commande de réglage de l'écartement maximal de la lame mobile par rapport à la contre-lame. Un premier double-clic sur la gâchette a pour effet de passer d'un angle d'écartement maximal de la lame par rapport à la contre-lame lorsque la gâchette est relâchée à un angle d'écartement réduit ; un bip sonore est généré. Un deuxième double-clic sur la gâchette 23 a pour effet de retourner en position d'écartement maximal de la lame en position ouverte lorsque la gâchette est relâchée ; un bip sonore est également généré. La position d'écartement réduit des lames 21, 25 correspond par exemple à un angle entre 30 et 70% de l'angle d'écartement en position d'ouverture maximale ; avantageusement, cet angle d'écartement réduit peut être ajusté, par exemple au niveau du deuxième circuit électronique.

Le processeur 101, ou un processeur dans l'ensemble à main, est agencé pour détecter des séquences de déplacement de la gâchette comprenant deux actionnements de la gâchette pressée rapidement pendant une durée maximale T1, suivi d'un maintien de la gâchette pressée pendant une deuxième durée supérieure à un deuxième seuil T2. Cette séquence est appelée double-clic avec maintien court. Elle a pour effet de mettre l'outil en mode de veille afin de réduire la consommation électrique. Un premier bip est généré après le double clic (comme dans le cas ci-dessus), un deuxième bip, qui peut être différent du premier bip, est généré après le temps T2. Il est possible de quitter ce mode de veille simplement en pressant une nouvelle fois sur la gâchette.

Le processeur 101, ou un processeur dans l'ensemble à main, est agencé pour détecter des séquences de déplacement de la gâchette comprenant deux actionnements de la gâchette pressée rapidement pendant une durée maximale T1, suivi d'un maintien de la gâchette pressée pendant une deuxième durée supérieure à un troisième seuil T3 plus long que le deuxième seuil T2. Cette séquence est appelée double-clic avec maintien long. Elle a pour effet de refermer la lame mobile 25 en lui faisant occuper différentes positions successives de fermeture, selon un cycle ; lorsque la gâchette est relâchée, le sécateur sauvegarde la position de fermeture sélectionnée, ce qui permet à l'utilisateur de sélectionner, parmi la pluralité de positions prédéterminées, la position dans laquelle la lame fixe 21 et la lame mobile 25 se croisent.

Un premier bip est généré après le double clic (comme dans le cas ci-dessus), un deuxième bip, qui peut être différent du premier bip, est généré après le temps T2, et un troisième bip après le temps T3.

Dans une variante les bips sonores peuvent être remplacés ou accompagnés par une LED ou toute autre source lumineuse clignotante. Dans une autre variante LED ou sources lumineuses de différentes couleurs peuvent être associées aux différents seuils T1 à T3.

D'autres séquences de déplacements particuliers de la gâchette peuvent être détectées et utilisées pour introduire des commandes et exécuter des fonctions auxiliaires. Par exemple, un maintien long de la gâchette pressée (sans double-clic préalable), des triple-clics, etc. peuvent aussi être utilisées afin d'introduire des commandes sans lâcher la gâchette.

Avantageusement, la lame mobile 25 ne se déplace pas lors de l'introduction d'au moins un type de commande au moyen de déplacements prédéterminé de la gâchette 23. Dans un autre mode de réalisation, la lame mobile se déplace dans une position prédéterminée indépendante de la position instantanée de la gâchette, par exemple en position fermée, lors de l'introduction d'au moins un type de commande au moyen d'un déplacement prédéterminé de la gâchette 23.

## Revendications

1. Procédé d'introduction de commandes dans un outil électroportatif, comportant :
presser une gâchette (23) pour provoquer le déplacement d'une lame mobile (25) ;
relâcher ladite gâchette (23) pour déplacer ladite lame mobile (25) en sens opposé ;
presser successivement la gâchette (23) deux fois de suite au cours d'une durée inférieure à un premier seuil (T1), et/ou maintenir ladite gâchette (23) pressée pendant une durée supérieure à un deuxième seuil (T2) pour introduire une commande d'exécution d'une fonction spéciale.

## Patentansprüche

1. Verfahren zur Eingabe eines Befehls in ein tragbares elektrisches Werkzeug, aufweisend:
Drücken eines Drückers (23) zum Veranlassen einer Bewegung einer beweglichen Schneide (25);
Entlasten des Drückers (23), um die bewegliche Schneide (25) in entgegengesetzte Richtung zu bewegen;
zwei maliges sukzessives Drücken des Drückers (23) während einer Dauer unterhalb eines ersten Schwellwerts (T1) und/oder Halten des gedrückten Drückers (23) während einer Dauer über einem zweiten Schwellwert (T2), um einen Befehl zum Ausführen einer speziellen Funktion einzugeben.

## Claims

1. A method for introducing commands in a portable electric tool, comprising:
pressing a trigger (23) in order to provoke the movement of a movable blade (25);
releasing said trigger (23) in order to move said movable blade (25) in opposite direction;
successively pressing the trigger (23) twice during a period below a first threshold (T1) and/or holding said pressed trigger (23) during a period above a second threshold (T2) to introduce a command to execute a special function.
